# EUROPEAN PATENT SPECIFICATION

(11) **EP 3 072 739 B1**
(45) Date of publication and mention of the grant of the patent: **25.09.2019**
(21) Application number: 16162495.2
(22) Date of filing: 25.03.2016
(51) Int. Cl.: B60P 1/64, B60F 3/00

(54) **METHOD FOR TRANSPORTING ISO CONTAINERS, AS WELL AS MEANS OF TRANSPORTATION**
VERFAHREN ZUM TRANSPORT VON ISO-BEHÄLTERN SOWIE TRANSPORTMITTEL
PROCÉDÉ POUR TRANSPORTER DES CONTENEURS ISO ET MOYENS DE TRANSPORT ASSOCIÉS

(30) Priority: 27.03.2015 NL 2014537
(43) Date of publication of application: 28.09.2016
(73) Proprietor: Ideevent B.V., 5263 EM Vught (NL); Bos, Cornelis Willem Joseph, 2728 HD Zoetermeer (NL)
(72) Inventor: Bos, Cornelis Willem Johan, 2728 HD Zoetermeer (NL); Bos, Frans Cornelis, 5263 EM Vught (NL)
(74) Representative: Nederlandsch Octrooibureau

(56) References cited:
- WO-A1-2015/012731
- WO-A2-2004/103830
- GB-A- 2 438 844
- US-A1- 2011 045 716
- US-A1- 2012 192 779

## Description

### TECHNICAL FIELD

The invention relates to a method whereby (inter)national containers, and secondarily other goods, are transported over water and land. The invention further relates to an amphibious means of transport.

### PRIOR ART

In known current methods for transporting goods, there is a clear distinction between transport over water and over land. For inland waters, barges are used with hulls that in past decades have become increasingly larger. Goods arriving by ship are transferred by quayside cranes at terminals. The last stage of transport almost always takes place over land, often by means of lorries that travel over public roads to the place of destination.

From prior practice, amphibious navy vessels are known for landing purposes often from sea to beach. In this way, troops and goods can be landed on rough terrain. The amphibious boat usually does not go further than the beach.

From patent document US 2014203534, specially prepared containers are known, which are designed to be used to land goods, in particular army tanks, on rough terrain. Also in this case, the amphibious boat remains on the beach.

From patent documents US 2012192779A1 and WO2004103830A2, autonomously travelling boats are known, which comprise a body consisting of a specially prepared container. These boats are not amphibious in nature. Further known is document WO 2015/012731 A1, which is considered as being the closest prior art and discloses the preamble of independent claims 1 and 7.

From the patent literature, many other patents are known that address a specific aspect of an amphibious vehicle, such as special wheels for rough terrain or marshland, the combined use of wheels and screws, and various ways of folding out of parts of cars or campers to boats.

Summarizing, it is therefore known how to transport containers in large quantities at the same time by container ship. During the transport from door to door, the containers therefore have to be transferred several times, between the container ship and barges or lorries. This is laborious, and also carries the risk of impact and damage to the contents of individual containers. On the other hand, it is known how to specially prepare individual containers so that they can be placed on land one at a time. The drawback here is that no door to door transport is possible, and one can no longer use standard containers for the transporting of individual containers.

It is therefore desirable to avoid the aforementioned drawbacks in the transporting of individual standard containers. It is also desirable to be able to transport standard containers individually and efficiently from door to door.

### BRIEF DESCRIPTION OF THE INVENTION

According to a first aspect, the invention provides a method for transporting containers as claimed in claim 1.

In particular, this concerns a method for transporting ISO containers, such as 20 ft. (1 TEU) ISO containers, 40 ft. (2 TEU) ISO containers, 45 ft. ISO containers, and/or high cube ISO containers. With the aid of the amphibious means of transport, it is possible to transport an individual standard container door to door without transhipment, even if a portion of the transport route occurs over water. The control means can be attended in the desired manner both on land and on water, and can comprise for example a rudder or directional screws, as well as steerable wheels.

In particular, the means of transport at the place of the transition between land and water can be driven and controlled so that a gradual transition occurs between the movement of the means of transport via the land transport members and the propulsion means, and the movement of the means of transport over a body of water via the flotation means and the propulsion means. The transport is preferably aimed at inland waterways.

Such a method of transport of an individual container is very efficient due to the limited handling that needs to be performed. Employment of operating personnel can thus be limited. For this, the method may also comprise the steps of:
- providing an amphibious means of transport which also comprises loading and unloading means,
- loading a container by the loading and unloading means, preferably on land,
- unloading a container by the loading and unloading means, preferably on land.

The container only needs to be handled at the beginning and end of the voyage, which can occur in any desired position with the help of its own loading and unloading means, or with the help of external loading and unloading means such as a quayside crane. The loading and unloading means can be used not only on land, but if desired also on the water.

The transport can be controlled or regulated in various ways during the voyage. According to a first possibility, the method may involve the steps of:
- providing a command post on or at the means of transport, and
- controlling the means of transport by a controller who is located in or on the means of transport.

Thus, during such a method of transport of the container, a controller must be permanently present, who takes charge of the entire route from door to door, possibly alternating with further controllers. Thus, the container remains supported by the means of transport, which increases the efficiency of the transport. The supporting of the ISO container by the means of transport can occur in various ways. For example, the ISO container can be placed on a loading platform of the means of transport, and/or be coupled with the means of transport.

However, it is not always necessary to control or regulate the transport by means of a controller who is located on board the means of transport. According to another possible embodiment, the method may comprise the steps of:
- providing remote control means, and
- controlling the means of transport by a controller remotely.

These above two described embodiments of the method may be combined, wherein it is possible to both control the means of transport by means of a controller on board, and optionally it is also possible to control the means of transport remotely. For example, one may consider remote control if longer routes have to be travelled, while the transport near the end points of the voyage is handled by a controller on board, such as in areas with intricate street patterns and the like where remote control is more cumbersome. The remote control means, for example, can coincide with a command post at a central (and possibly fixed) location, such as a command centre, from which several transport processes can be regulated at the same time.

According to the invention, the transport comprises moving the means of transport in dependence on a guide vehicle in the manner of a "master/slave" control system, such as a guide vehicle in the form of at least one other means of transport to form a convoy.

It is also possible here to move more than two means of transport, such as ten or twenty, one after the other and/or next to each other; this can also occur by means of one controller who is located on board the foremost means of transport, and/or by means of remote control from the foremost means of transport.

Moreover, a transport method is possible comprising the steps of:
- providing an infrastructure with beacons, such as transmitters,
- providing sensors on the means of transport,
- steering the means of transport by means of the control means based on data exchange between the beacons or transmitters and sensors.

In such a method of transport, the means of transport can move in an autonomous manner, for example, in that the routeing is established in advance in a software program. In this case, no controller is needed aboard the means of transport, or on site at a central command station. In particular, it can be provided that the control is exercised in an autonomous manner exclusively on the basis of the data exchange between beacons or transmitters and sensors.

In connection with the stability and/or propulsion optimization of the means of transport in floating state, the method may include the step of trimming the means of transport in dependence on the position of the centre of gravity of the means of transport with the container supported by it, for stabilizing and/or optimizing propulsion of the means of transport with container.

The term "trimming" refers herein to the adjustment of the horizontal position of the amphibious vehicle (or group of amphibious vehicles) in the longitudinal direction and/or the transverse direction. The trimming for stabilization and/or propulsion optimization can be done in response to differing external influences, such as wind strength, heaving of the water, or slope of the terrain.

According to a second aspect, the invention provides an amphibious means of transport according to claim 7. The water mass W displaced by the combination of the means of transport with the container and the cargo floating in the water provides an upward force which is equal to W·g, where g is the acceleration of gravity. The sum of the masses of the means of transport T, the mass of the container C and the mass of the cargo L is equal to (T+C+L)·g. If W·g > (T+C+L)·g, the combination of means of transport, container and cargo will float merely due to the buoyancy of the flotation means of the means of transport.

In particular, this relates to an amphibious means of transport for the transporting of (standard) ISO containers, such as 20 ft. (1 TEU) ISO containers, 40 ft. (2 TEU) ISO containers, 45 ft. ISO containers, and/or high cube ISO containers.

The propulsion means may be positioned and formed in various ways. According to embodiments, the propulsion means may comprise both land transport members (such as wheels) and water transport members (such as screws), and the land transport members and water transport members can be integrated into a separate propulsion system, wherein each propulsion system forms an independent unit. Such a unit may be arranged, for example, so that it can rotate about an axis with respect to the float of the amphibious means of transport, independently of the other units. Such units may be arranged, for example, at the outermost corner points of floats, but other positions are possible. According to other embodiments, the land transport members and the water transport members may be arranged as separate units, on, at or in the amphibious means of transport. Thus, the amphibious means of transport may be provided with retractable land transport members and receiving spaces (boxes) in which to retract the land transport members and thereby reduce the flow resistance during transport over water. The water transport members may be formed as jet nozzles which are arranged on or in the amphibious means of transport, at a distance from the land transport members.

The amphibious means of transport may be outfitted with communication means for sending data, such as data related to position and/or speed, and for receiving data, such as data relating to routeing.

According to a special embodiment, the control means may be configured to operate fully autonomously, so as to follow a route entirely on the basis of data which is exchanged via the communication means with regard to a routeing. The aforementioned sensors may be part of this communication means, and configured to cooperate with beacons along a route to be followed.

In order to enable an unimpeded transport by road, the external dimensions, the axle and/or wheel load, and the total mass may be attuned to local regulations or local law requirements for freight transport.

The container may be supported in various ways by the means of transport. According to a first possible embodiment, as mentioned, a loading platform or cargo space is provided for this, on or in which an ISO container may be received. The means of transport may then be implemented as a single unit. According to another possible embodiment, however, the means of transport may comprise at least two transport parts, each comprising supporting means for supporting an ISO container separately from each other. In particular, the container may be coupled to both transport parts. The transport parts may move independently of each other.

Moreover, the invention relates to, in combination, a means of transport as described above as well as an ISO container supported by it, wherein the buoyancy of the means of transport with regard to water is sufficient to support ISO containers and the cargo contained therein in the water, preferably at a distance above the surface of the water.

The invention describes a method of transporting (inter)national containers, and secondarily other goods, in amphibious manner over water and land, wherein the amphibious means of transport in principle can navigate and be loaded and unloaded autonomously. The major portion of the route is travelled here over inland waterways. Destinations situated at a certain distance from inland waterways can also be reached by this method without intermediate transhipment.

The method introduces a logistical procedure making use of an amphibious means of transport which should satisfy a number of requirements. Requirements are also imposed on the physical infrastructure and digital ICT structure along the route. These technical aspects are described in this invention.

In the new logistical procedure, containers and possibly other goods are transported with the amphibious means of transport over water and land, wherein one may also make use of public roads. The latter, however, places requirements on the maximum dimensions and cargo of the vehicle. The preferred variant focuses on a limited number of containers per shipment, just as is the case with lorries.

An amphibious means of transport allows transitioning between water and land. For this, ramp ways are needed, which can generally be situated at harbour terminals. One can also conceive of transportable ramps.

In the new logistical procedure, the amphibious means of transport need to be able to travel their route in autonomous manner, without a controller on board. This may require the use of ICT equipment for positioning, object recognition, and communication.

It is also desirable to provide route beacons. The amphibious means of transport may be controlled remotely from a central ICT post. The remote control can be taken over in event of any problems or difficult sections of route.

The amphibious means of transport need to be manoeuvrable due to the many manoeuvring requirements in the water and on land, as well as at the transition between water and land. These vehicles may preferably be able turn in place. The movement system needs to be designed for this.

On water the desired stability places demands on the amphibious means of transport. Owing to the relatively limited maximum dimensions, the vehicle can quickly become unstable. Furthermore, containers are often not symmetrically loaded. Stability can be regulated by shifting the cargo or any ballast, as well as changing the position or volume of the flotation means. With these means, the horizontal attitude of the amphibious vehicle can also be regulated (trimmed) in the longitudinal and transverse direction in order to improve the sailing properties.

The amphibious means of transport can also travel in a convoy on water and in a train on land. A physical coupling is not required for this. By mutual communication, the vehicles can attune their desired position and speed to each other. On water, however, the vehicles can sail one behind another but also alongside each other.

In this new logistical system, manned means of transport are not excluded. This would be the case for short distances. Besides manning with a crew directly on board, it is furthermore possible for the control to be taken over with the help of a guide vehicle on land or guide vessel on the water.

The new logistical system also provides for the independent loading and unloading of the cargo with special equipment on board, wherein the cargo can also be repositioned in connection with the stability and the propulsion optimization. An elegant design involves the integrated combination of a system for loading and unloading, for the assurance of stability and propulsion optimization, and for the coupling (decoupling) of the means of transport in two parts which can each move independently.

According to one embodiment, the means of transport comprises: - at least two vertical actuators which are physically spaced apart for local adjustment of the means of transport, possibly in combination with the supported ISO container and cargo, in a vertical direction with respect to a fixed support surface, and - at least two weight sensors which are physically spread apart for local determination of a weight of the means of transport, possibly in combination with the supported ISO container and cargo, with respect to the fixed support surface. Here, the vertical actuators and weight sensors are configured to cooperate for determining the vertical centre of gravity of the means of transport, possibly in combination with the supported ISO container and cargo.

According to a third aspect, the invention provides an arrangement of two means of transport according to the second aspect. Here, each means of transport is provided with a coupling system for coupling the respective means of transport with the ISO container, so that the means of transport are each positioned along a corresponding longitudinal side or transverse side of the ISO container, in order to jointly support and move the ISO container over land and over water.

By coupling of the two amphibious means of transport along the opposite longitudinal walls of the container, a rigid combination is formed that may move as an integral vehicle in autonomous manner over land and over water. In this way, the container can be moved autonomously over land and water in an efficient manner, without the need for transhipment and without special adaptations to the container construction (e.g., with regard to buoyancy, water tightness, etc.). In other embodiments, the amphibious means of transport may also be directly coupled together into an arrangement.

According to one embodiment, each means of transport in the arrangement is provided with a float having a top side, and with a loading/unloading system which is designed to jointly lift the coupled ISO container with a base surface to above the top sides of the floats, prior to moving the means of transport with supported ISO container over land and over water.

According to one embodiment, at least one of the coupling systems comprises a trim system, which is provided with actuator mechanisms for independently moving the ISO container in the longitudinal and/or transverse directions with regard to the corresponding float.

### BRIEF DESCRIPTION OF THE FIGURES

Embodiments will now be described, by way of example only, with reference to the accompanying schematic drawings. Corresponding elements in the figures are indicated by corresponding reference symbols. Multiple instances of an element can be indicated with an additional letter in their reference symbol. Thus, two instances of a particular element "20" can be indicated as "20a" and "20b". The reference symbol can be used without the additional letter (e.g. "20") in order to generally refer to an unspecified instance or to all instances of that element, while the reference symbol will contain an additional letter (e.g. "20a") to refer to a specific instance of the element.
Figures 1a and 1b show methods for the transporting of ISO containers according to embodiments;
Figures 2a-2d show an amphibious means of transport according to one embodiment;
Figures 3a-3i show amphibious means of transport with trim mechanisms according to embodiments;
Figures 4a-4c show a control system for an amphibious means of transport according to one embodiment;
Figures 5a-5c show methods of interaction between means of transport according to embodiments;
Figures 6a-6f show methods of steering of amphibious means of transport according to embodiments;
Figures 7a-7d show combinations of amphibious means of transport according to embodiments;
Figures 8a-8c show a combination of amphibious means of transport according to one embodiment;
Figures 9a-9d illustrate a loading/unloading function of the combination from Figures 8a-8c, and
Figures 10a-10b show an amphibious means of transport according to an alternative embodiment.

The drawings are only intended for illustrative purposes, and do not serve to limit the extent of protection which is defined by the claims.

### DESCRIPTION OF EMBODIMENTS

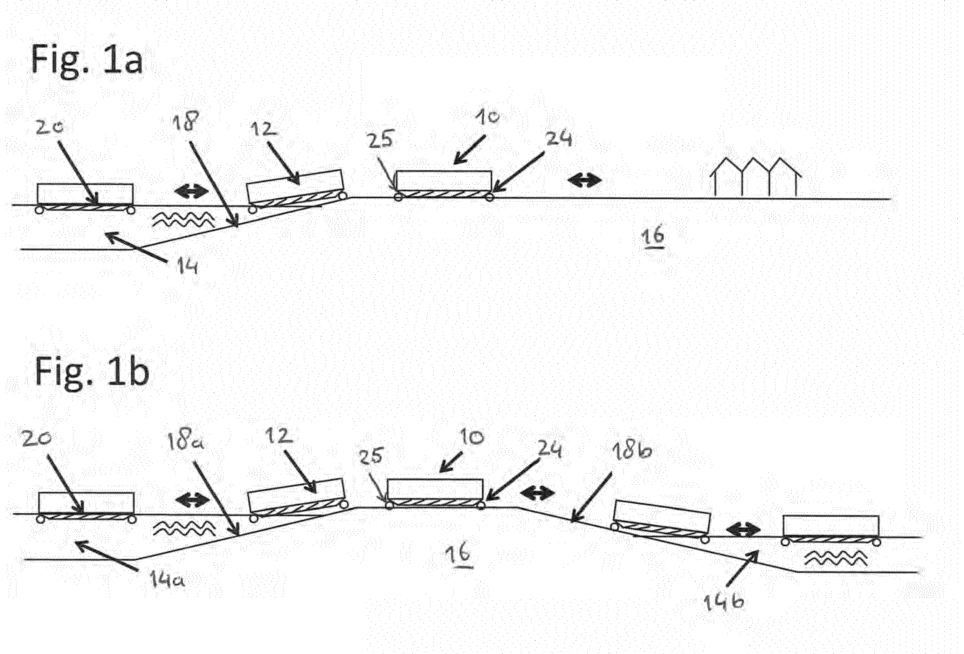

Figures 1a and 1b show an amphibious means of transport 10, which can move in water 14 and on land 16, and also across the transition between water 14 and land 16 with the help of fixed or movable ramp systems 18. With two ramp systems (portage) 18a, 18b a difference in water levels 14a and 14b can also be handled. For this, the means of transport 10 has a flotation means 20 in the water and a land transport member 24, 25 on land. The amphibious means of transport 20 is intended for the movement of continental or intercontinental containers 12 and secondarily other goods.

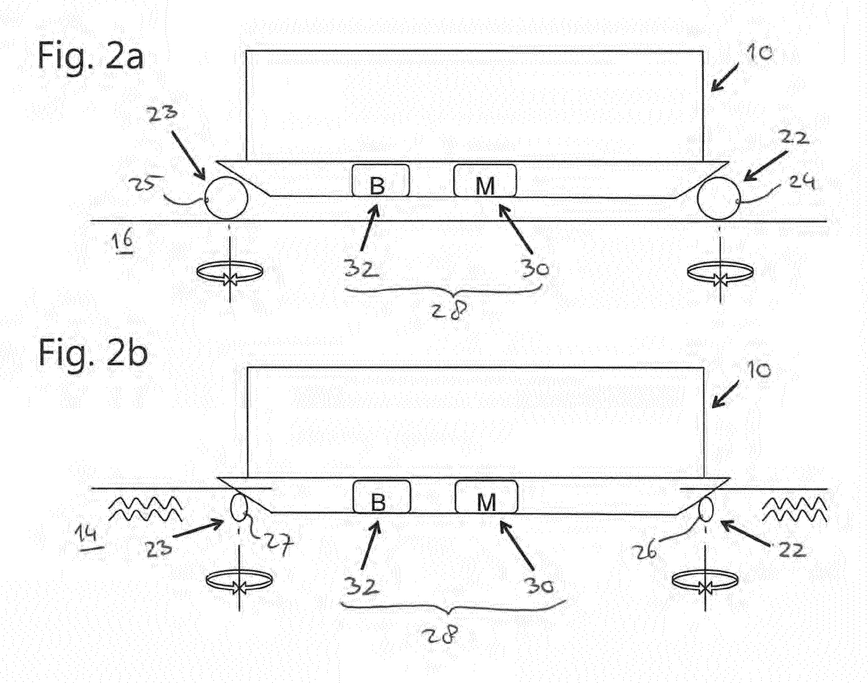

Figures 2a and 2b show propulsion systems 22, 23 for an amphibious means of transport 10 for the purpose of the movement and manoeuvrability of this vehicle. Each of these propulsion systems 22, 23 can be designed with subsystem 24, 25 on land 16 and with subsystem 26, 27 in water 14. For this, automotive wheels 24, 25 or caterpillar tracks on land 16 and screws 26, 27 or water jets in the water 14 may for example be considered.

The amphibious means of transport 10 is manoeuvrable and can preferably rotate 360 degrees about its vertical axis. For this, the subsystems 24, 25 and 26, 27 may be provided all around. Each subsystem may be rotatable, preferably over 360 degrees, about its own vertical axis.

Figures 2a and 2b show a drive system 28 for driving the at least one propulsion system 22, 23. The drive system 28 consists of subsystem 30 for the motor(s) and subsystem 32 for the power supply source(s). Here, the motor 30 can be placed centrally per support member or directly at each propulsion system 22, 23. For the motor 30, one can use a combustion engine, electric motor or hybrid mechanism. The power supply source 32 can comprise of fossil fuel and/or electric storage battery and/or a fuel cell.

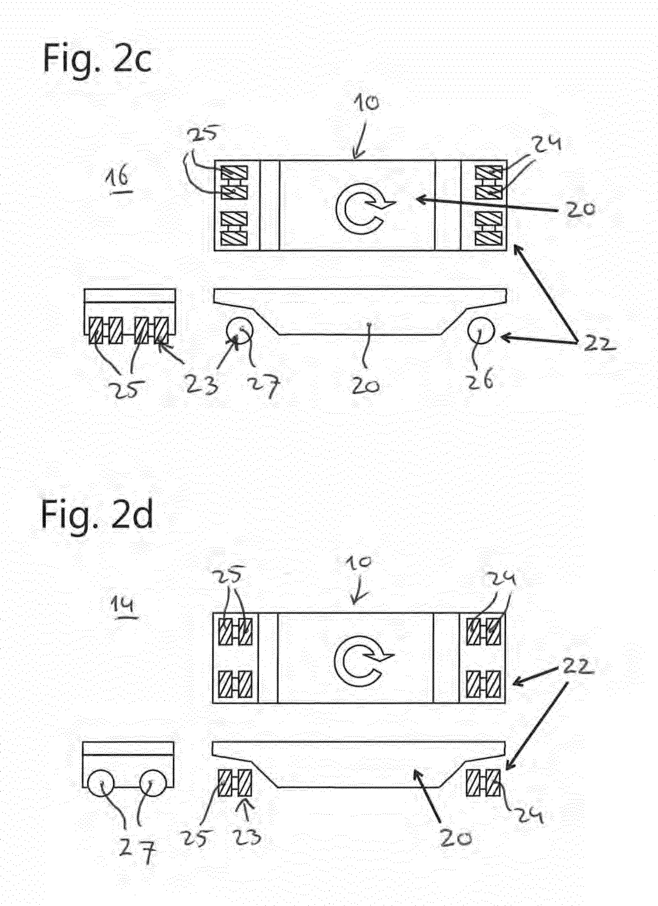

Figures 2c and 2d show that the separate subsystems 24-27 for land 16 and water 14, respectively the land transport members 24, 25 and the propulsion means 26, 27, may be integrated into a single propulsion system 22, 23, making use as much as possible of the same components while preserving the rotatability.

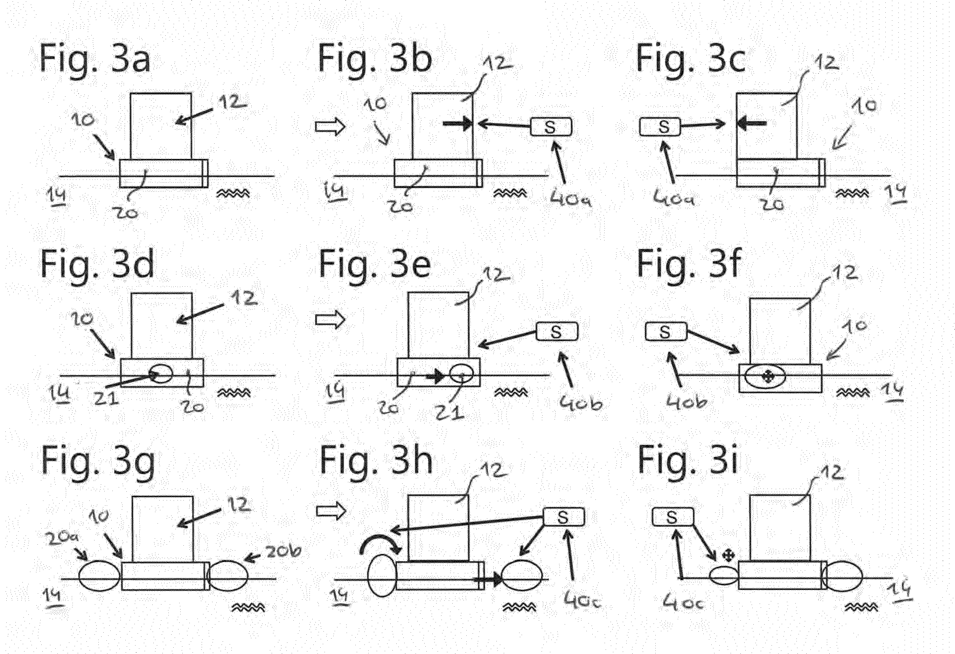

Figures 3a-3i show a stability and trim system 40 for an amphibious means of transport 10 for purposes of the stability and horizontal positioning of the vehicle in the water 14, and configured to change the vertical upward and downward forces in position and magnitude. For this, the trim system 40 may be implemented in accordance with figures 3a-3c as a subsystem 40a that is configured for displacing and/or rotating the cargo 12, or in accordance with figures 3d-3f as a subsystem 40b that is configured for adding and/or shifting ballast 21, or in accordance with figures 3g-3i as a subsystem 40c that is configured for displacing, rotating, or changing volume of flotation means 20a, 20b. If desired, the dimensions of the amphibious means of transport 10 may be changed in order to enable access to public roads.

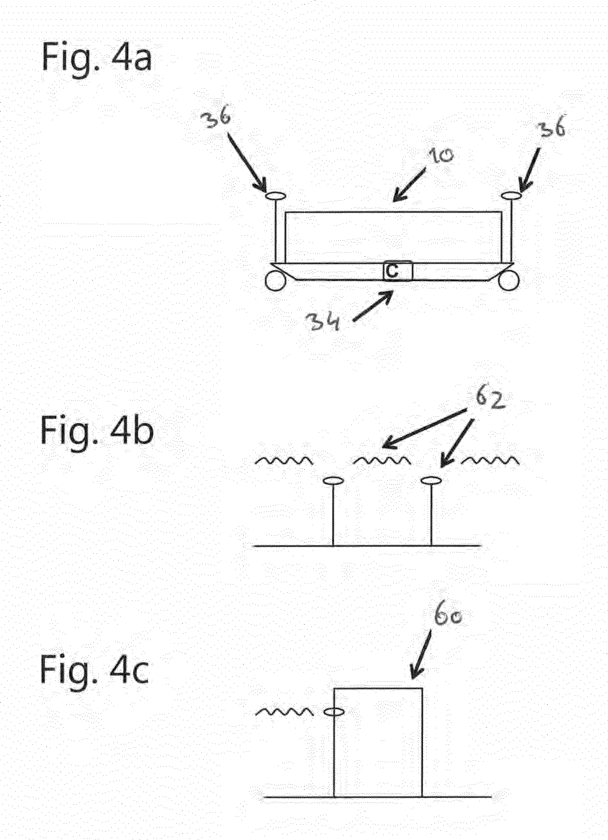

Figures 4a-4c show a control system 34 for an amphibious means of transport 10 which may travel a defined route between two points without a controller on this means of transport 10. For this, the means of transport 10 may also have a sensor system 36, which among other things is configured to locate its geographical position and to perceive the surroundings of the route, and to communicate with route beacons 62 in the infrastructure and with other vehicles and vessels. The amphibious means of transport 10 may also be connected to a central manned control system 60 which maintains control over the logistical trajectory and which may take over the control for this when necessary.

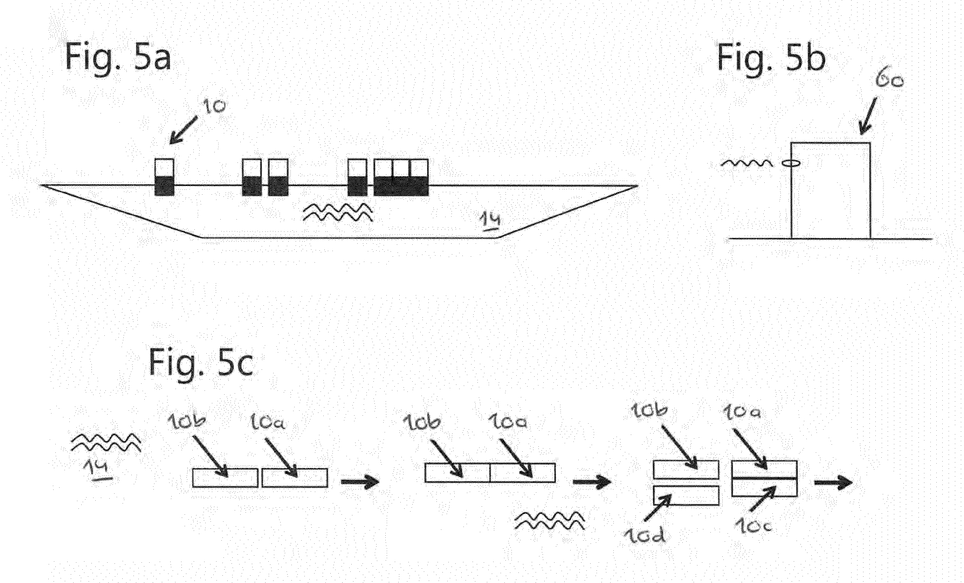

Figures 5a-5c show an amphibious means of transport 10 which, with the control system 34 and sensor system 36 from figure 4, may travel together with one or more other amphibious means of transport 10b-10d, in position of one after the other such as vehicle 10a and 10b, or alongside each other such as vehicles 10a and 10c or 10b and 10d. With the help of the control system 34 from figure 4a and sensor system 36 and centrally manned control system 60 from figure 5b, the vehicles 10a-10d coordinate their position and movement with each other.

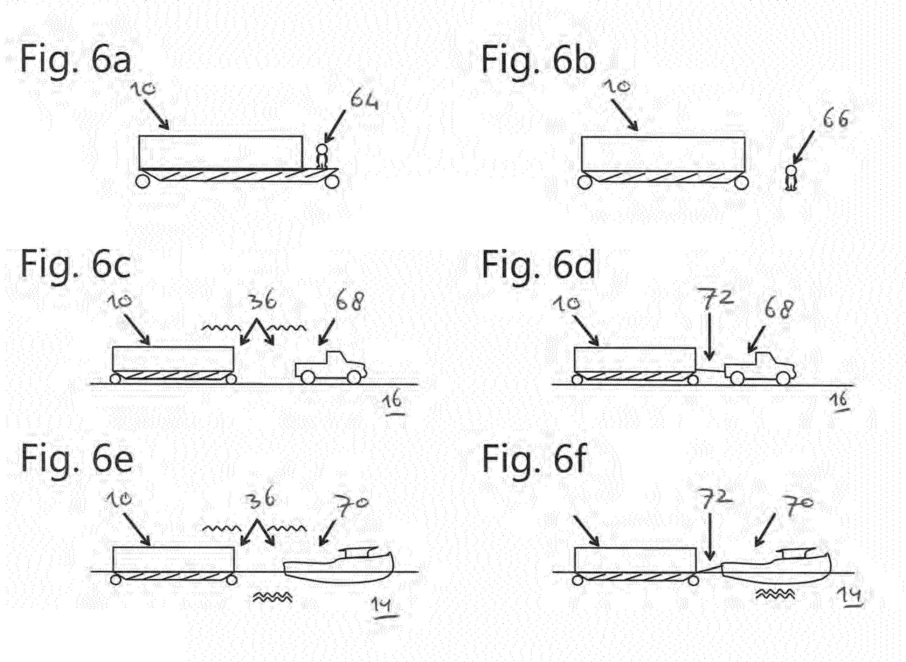

Figures 6a and 6b show an amphibious means of transport 10 which may have an operator on board 64 (Fig. 6a), or in the direct surroundings 66 (Fig. 6b), and employs the control system 34 from figure 4. The amphibious means of transport 10 in accordance with figures 6c and 6d or figures 6e and 6f may likewise be coupled to a manned vehicle 68 or vessel 70, respectively. This coupling can be via sensor system 36 or a physical coupling system 72. Human control will occur mostly for short distances.

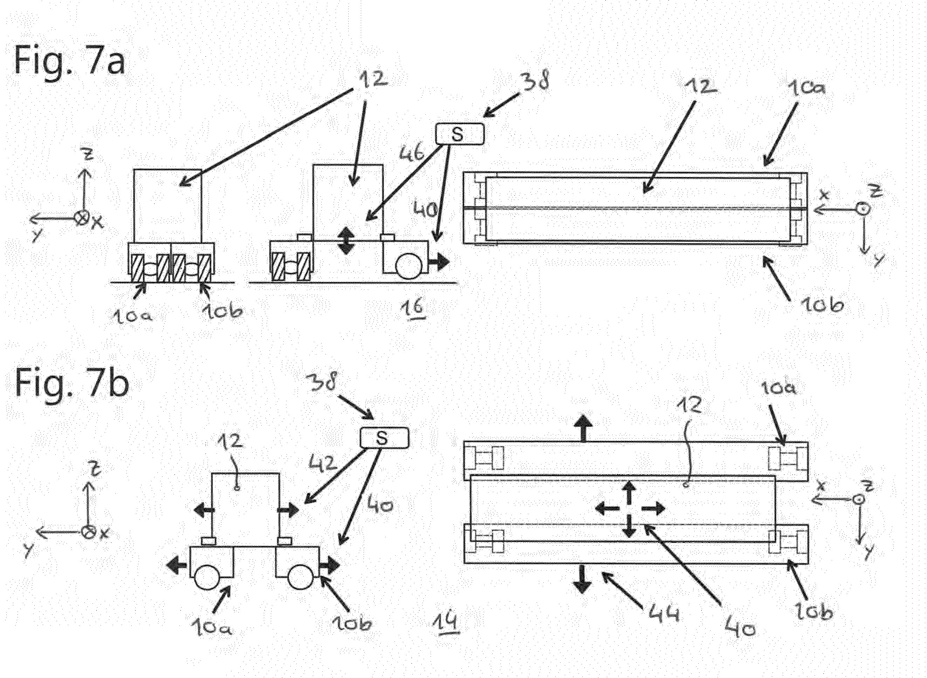

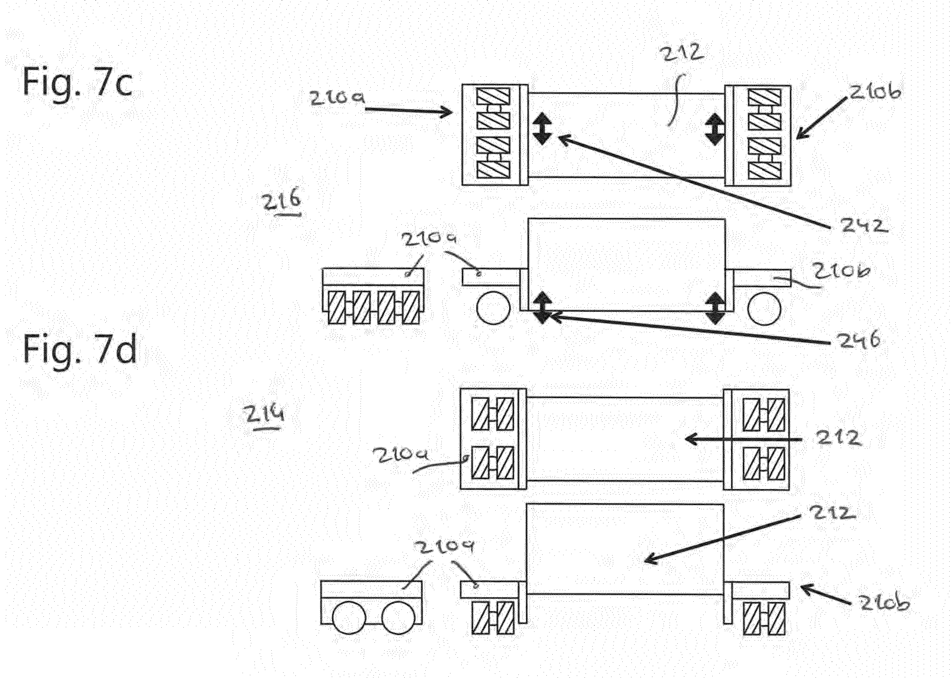

Figures 7a and 7b or 7c and 7d respectively show different embodiments of an integrated system for an amphibious means of transport 10 and 210. As shown in figures 7a and 7b, such an integrated system comprises a coupling (decoupling) system 38 for possible implementation with two (or more) independently moveable means of transport 10a and 10b or 210a and 210b respectively, with which the cargo 12, 212 and/or both means of transport are mutually repositionable (system 40) for stabilization and horizontal positioning of the vehicle, and with which the cargo may be loaded and unloaded independently (system 46). The coupling (decoupling) system 38 may also engage with the cargo 12 and in particular (inter)continental containers, wherein this cargo 12 forms part of the system and establishes the interconnection between the means of transport 10a and 10b or 210a and 210b, respectively. The means of transport 10a and 10b or 210a and 210b respectively may each be entirely autonomous.

In order to explain the spatial properties of the amphibious means of transport 10a and 10b or 210a and 210b according to the examples in Figures 7a-7d, Cartesian coordinates are used here. The intercontinental container 12, 212 essentially forms a cuboid object with a base surface, a top surface, and two pairs of mutually opposite side walls, which together enclose an interior space for a cargo. The side walls of the first pair of mutually opposite side walls (the "longitudinal walls") extend with their longest dimensions in a first direction X (also referred to as the "longitudinal direction X"). During normal use, this first direction X preferably extends predominantly horizontal, at least so far as allowed by the methods for transporting and handling the container. The side walls of the second pair of mutually opposite side walls (the "transverse walls") extend in a second direction Y (also referred to as the "transverse direction Y"), which is transverse to the first direction X. This second direction Y also preferably extends essentially horizontal during normal use. A third direction Z is oriented perpendicular with respect to the first and second directions X, Y, and extends preferably vertically during normal use (the "vertical direction Z").

In the embodiments of Figures 7a and 7b, the two amphibious means of transport 10a and 10b are adapted so as to be coupled to the container 212 for transport with their longest dimension along both longitudinal walls of the container 212 (i.e. oriented along the first direction X).

In the embodiment of Figures 7c and 7d, the two amphibious means of transport 210a and 210b are adapted so that they are coupled to the container 12 for transport along both transverse walls of the container 12 (i.e., oriented along the first direction Y).

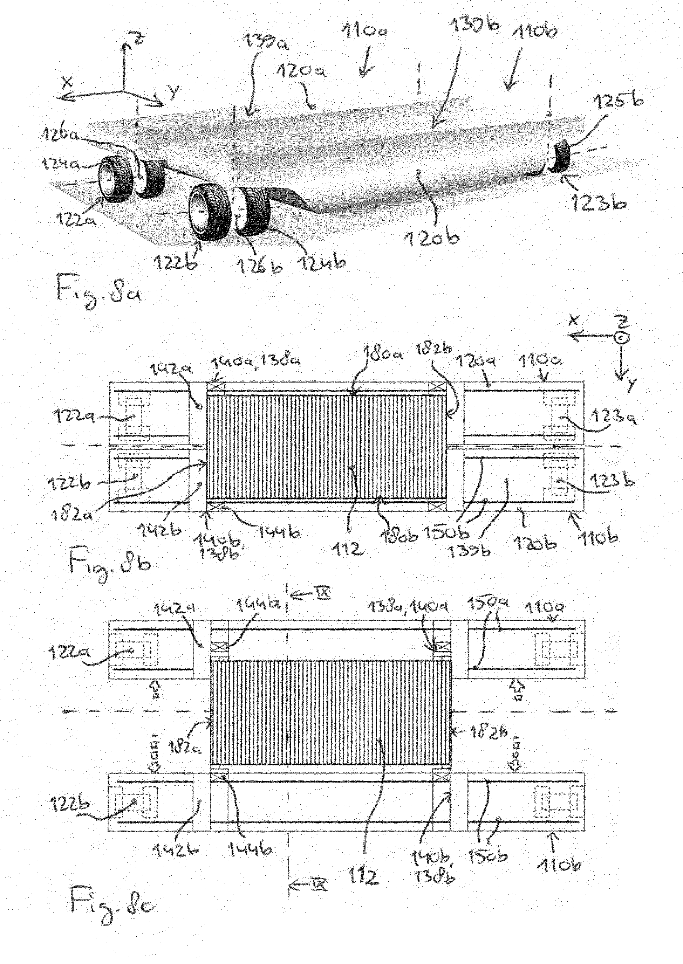

Figures 8a-8c show in more detail an embodiment with a pair of interacting amphibious means of transport 110a, 110b based on the principle of Figures 7a and 7b. Elements and properties of the above-described embodiments of amphibious means of transport (see Figures 1-7) can also be present in the amphibious means of transport 110a, 110b shown in Figures 8a-8c, and are not again discussed here. Comparable elements are indicated with similar reference numbers, but preceded by a hundred to distinguish the embodiments. Again, Cartesian coordinates are used.

Figure 8a shows a perspective view of the pair of amphibious means of transport 110a, 110b. Each amphibious means of transport 110 comprises a flotation means 120 which is shaped as an oblong float 120, which in figure 8a extends along the longitudinal direction X. A loading platform may be provided on a top side 139 of each of the oblong floats 120.

At the two opposite longitudinal ends of each oblong float 120 there is provided a propulsion system 122 and 123. Each propulsion system 122 and 123 is provided with a land transport member 124 and 125 for autonomous movement of the amphibious means of transport 110 over land, and a water transport member 126 and 127 for autonomous movement of the amphibious means of transport 110 over water. In this example, each land transport member 124, 125 is provided with a pair of driven wheels, and each water transport member 126, 127 is formed as a jet nozzle with a (virtual) axis of propulsion, which essentially coincides with the (virtual) axis of rotation of the wheels of the corresponding land transport member 124, 125. Here, each land transport member 124, 125 and the corresponding water transport member 126, 127 is integrated into a separate propulsion system 122, 123, which forms a unit that is independently rotatable about an axis parallel to the third direction Z and with respect to the float 120. Preferably, each propulsion system 122, 123 is independently rotatable through a complete rotation angle of 360°. For clarity, the coupling system 138 and the trim system 140 for the manipulating of the container 112 are not yet shown in figure 8a.

Figures 8b-8c show in more detail the interaction between the amphibious means of transport 110a, 110b and the coupling to and trimming of the container 112 via the coupling and trim systems 138, 140. Figure 8b shows that each of the two amphibious means of transport 110a, 110b is provided with a coupling system 138 that is configured to couple the respective amphibious means of transport 110 to the container 112, while the float 120 of the respective means of transport 110 is positioned along a corresponding longitudinal wall 180 of the container 112.

Due to the coupling of both amphibious means of transport 110 to the opposite longitudinal walls 180 of the container 112, a rigid combination is formed, which can move as an integrated vehicle in autonomous manner over land and over water. After the formation of this combination, the propulsion systems 122, 123 are situated near four corners of the combination and at a distance from the container 12 in the longitudinal and transverse directions Y, X.

Figures 8b-8c also show a trim mechanism in more detail. This trim mechanism is designed to stabilize the combination during transit in the water, and for dimensional adaptation of the combination during transport over land, due to horizontal shifting of the cargo 112 with respect to the means of transport 110. For this, each of the amphibious means of transport 110a, 110b is provided with a trim system 140a, 140b. This trim system 140 is composed of subsystems 142, 144, which allow controlled movements of the container 112 in the longitudinal and transverse directions X, Y and with respect to the float 120 and the propulsion systems 122, 123.

The first subsystem 142 is formed here by means of two platforms which are independently moveable back and forth along the longitudinal direction ±X with respect to the corresponding float 120. Each platform is provided with an upright structure in order to enclose the container 112 along the longitudinal directions ±X. Such upright structures may be formed, for example, by boxes with support/fender surfaces, wherein the two support surfaces of the platforms from the same subsystem 142 are arranged facing each other, viewed in the longitudinal directions ±X, so that they can enclose the container 112 along the transverse walls 182a, 182b. Each platform may be equipped with its own actuator for the back and forth movement along the longitudinal directions ±X. Each float 120 may be provided with guide structures 150, which are adapted to facilitate displacement of the two corresponding platforms along the longitudinal directions ±X. In this example, the floats 120 are provided with a pair of rails 150 on a top side.

The second subsystem 144 of each amphibious means of transport 110 comprises two actuator bodies, wherein each actuator body is moveable with respect to the corresponding float 120. Each actuator body is coupled to a corresponding platform of the first subsystem 142, and is independently moveable back and forth along the transverse directions ±Y. The two actuator bodies of a corresponding second subsystem 144 are placed so that they can enclose the container 112 from the same transverse direction (+Y or -Y). Each platform of a corresponding first subsystem 142 may be provided with a transverse actuator and/or with guide structures for facilitating movement of the corresponding actuator body along the transverse directions ±Y.

By means of the trim system 140, the external dimensions and/or the local axle and/or wheel loads of the combination may be dynamically adapted, in order to meet local freight traffic requirements. As shown in figure 8b, the mutual spacing between the amphibious means of transport 110a, 110b is minimized in the transverse direction Y, and the total width of the combination is reduced in the transverse direction Y to little more than the width of the container 112, in order to make transport over standard roads easier. As shown in figure 8c, the mutual spacing between the amphibious means of transport 110a, 110b and thus the total width of the combination in the transverse direction Y is increased, for a more stable attitude during transport over water. For purposes of the trim function, the amphibious means of transport 110 may be provided with orientation sensors and/or weight sensors at the level of the propulsion systems 122, 123.

Thus, this embodiment provides an arrangement of autonomously sailing and driving amphibious means of transport 110a, 110b on which a standard ISO container 112 can be placed, so that this container 112 (without special adaptations to the container construction, such as buoyancy, water tightness, etc.) can be moved autonomously over land and water, without requiring transhipment of the container 112 or the goods in the container 112.

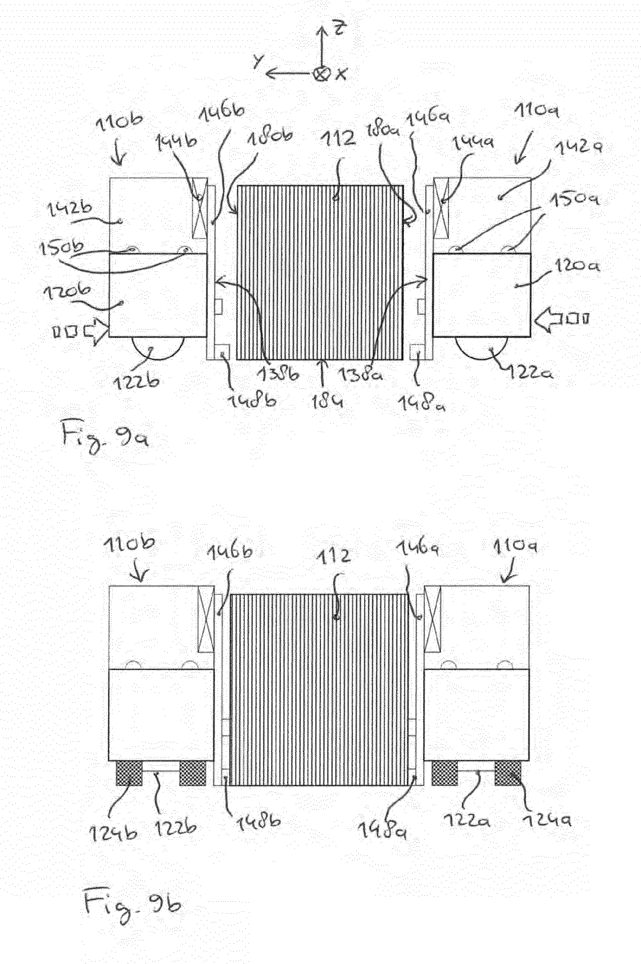

Figures 9a-9d schematically illustrate an interaction between the trim mechanism and a loading/unloading mechanism according to the embodiment of figures 8a-8c. This embodiment of the interacting amphibious means of transport with trim systems and loading/unloading systems allows autonomous loading and/or unloading of a container on land (for example, at the quay).

The amphibious means of transport 110 may each be provided with a loading/unloading system 146 having a lift actuator and coupling members 148 (e.g. retractable or rotatable pins) for temporarily securing the container 112 with respect to the means of transport 110. The container 112 may for example be provided with fastening lugs (not shown) near the base 184 at the corners, in/on which the coupling members 148 may be temporarily secured. Each loading/unloading system 146 is moveable by means of the corresponding lift actuator (not shown) in vertical directions ±Z with respect to the corresponding float 120.

Figure 9a illustrates how each of the two amphibious means of transport 110 independently approaches its own longitudinal side 180 of the container 112 via its own path in the positive or negative transverse direction ±Y. This container 112 initially stands freely with its base surface 184 on a underlying supporting surface. At least one of the propulsion systems 122, 123 is rotated with respect to the corresponding floats 120 so that the corresponding wheels 124, 125 allow sideways movement of a portion of the amphibious means of transport 110 in the transverse directions ±Y. In embodiments where the wheels 124, 125 are placed co-linear, viewed in the longitudinal direction X, it is preferable - due to risk of toppling - to alternatingly turn only one of the wheels 124 or 125 in the transverse direction Y, so that the amphibious means of transport 110 may execute a jerking lateral movement for approaching the container 112. The loading/unloading system 146 with coupling members 148 of each amphibious means of transport 110 may be in advance be placed at such a vertical position that the coupling member 148 will be situated at the right height near the base surface 184 of the container 112.

Figure 9b illustrates how the container 112 is enclosed at the longitudinal walls 180a, 180b by relative movement of the second subsystems 144 of each amphibious means of transport 110 in the transverse directions ±Y. For this, the upright structures of the first subsystems 142 preferably are first brought along the longitudinal directions ±X up close to the transverse walls 182a, 182b of the container 112, in order to enclose the container 112 in the longitudinal directions ±X. The coupling members 148 of the loading/unloading systems 146 may now be received in the fastening lugs of the container 112, so that the container 112 will be temporarily secured to the amphibious means of transport 110. The loading/unloading systems 146 may be provided with extra pressure points in order to laterally stabilize the engagement with the container 112.

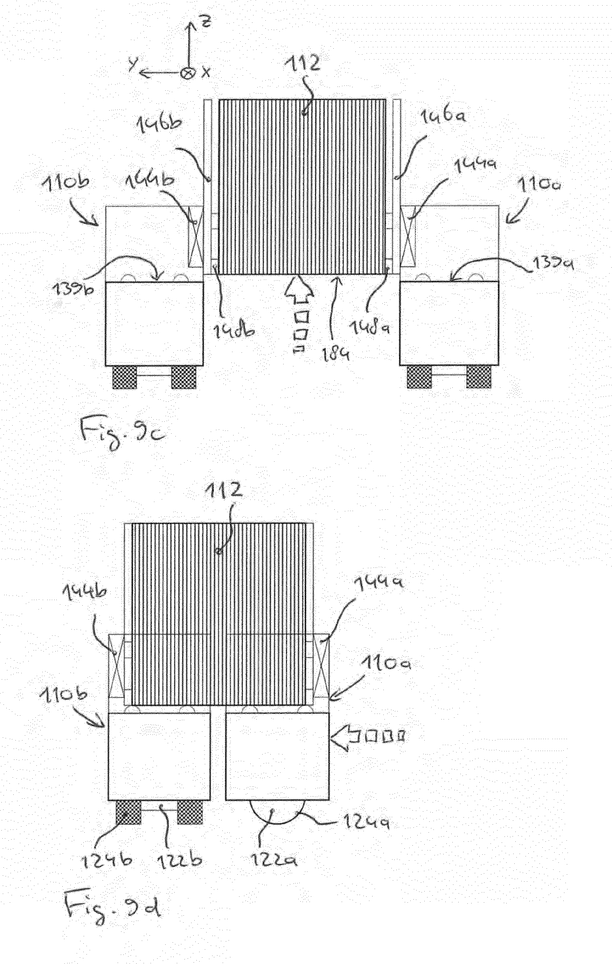

Figure 9c shows that the container 112 may be lifted in the vertical direction Z with respect to the floats 120 by means of the loading/unloading systems 146 and lift actuators. In this way, the container 112 with the base surface 184 may be lifted to the same height as the top sides 139 of the floats 120 (or possibly even higher). At this minimum height, it becomes possible to move the container 112 by means of the trim systems 140 in the longitudinal directions ±X and/or the transverse directions ±Y with respect to the floats 120, for purposes of weight balancing or dimensional adjustment.

Figure 9d illustrates a method wherein the amphibious means of transport 110 may be moved towards each other in the transverse direction Y on land, so that container transport becomes possible with a minimum transverse dimension of the combination. For this, the propulsion systems 122a, 123a of a specific amphibious means of transport 110a are rotated with respect to the corresponding float 120a so that the corresponding wheels 124a, 125a allow sideways movement of this amphibious means of transport 110a in the transverse directions ±Y. The propulsion systems 122b, 123b of the other amphibious means of transport 110b remain rotated with respect to the corresponding float 120b so that the corresponding wheels 124b, 125b allow essentially no sideways movement of this amphibious means of transport 110b in the transverse directions ±Y. By letting the wheels 124a, 125 move sideways and at the same time letting the actuator bodies of the second subsystems 114 move transversely and outwardly, the amphibious means of transport 110 may be moved towards each other in the transverse direction Y on land.

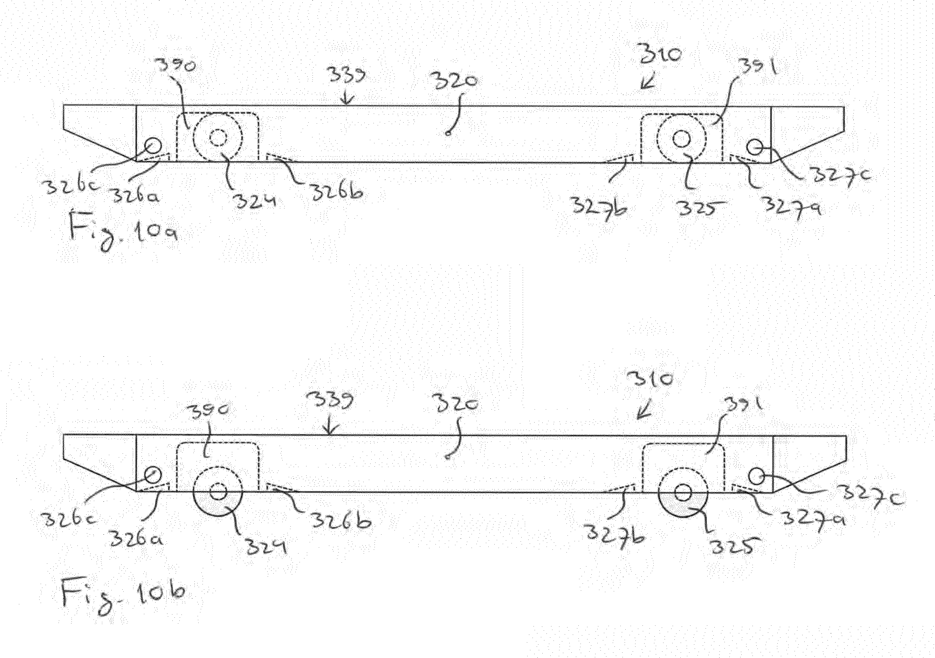

Figures 10a-10b show an amphibious means of transport 310 according to an alternative embodiment. This embodiment can be constructed in a cost efficient manner with commercial off the shelf (COTS) components.

In this example, the land transport members 324, 325 and the water transport members 326, 327 are arranged separately from each other in the amphibious means of transport 310. Here, the land transport members are formed as retractable wheels 324, 325 and the float 320 is provided with wheel wells 390, 391 which are large enough to receive the corresponding wheel 324, 325 in the retracted state partly or even entirely within the contour of the float 320, in order to reduce the flow resistance during transport over water. The retractable wheels 324, 325 may optionally be rotatable in the longitudinal and transverse directions (i.e., about a nearly vertical axis).

The water transport members are formed here by several jet nozzles 326a-c, 327a-c which are arranged in the vicinity of the wheel wells 390, 391 but not coupled to the retractable wheels 324, 325. The jet nozzles 326a-c, 327a-c can each define their own principal direction of propagation. For purposes of efficient propagation, the jet nozzles 326a, 326b, 327a, 327b in this embodiment are arranged at the bottom side of the float 320, with the principal direction oriented at an angle of approximately 15° to 20° to the longitudinal direction.

It will be clear that the above-described embodiments are only described by way of example and not in any restrictive sense, and that various changes and adaptations are possible without leaving the scope of the invention, and that the purview is determined only by the enclosed claims.

In other embodiments, the amphibious means of transport may interact such that they jointly form a loading platform for the supporting of the container, and the container may be placed by means of an outside lifting means (such as a crane) on top of the arrangement of amphibious means of transport. In these embodiments, the amphibious means of transport do not necessarily have to be provided with loading/unloading systems, and the coupling systems of the amphibious means of transport may engage the container only after the container has been placed on the amphibious means of transport. The amphibious means of transport in these embodiments may still be provided with trim systems. The trimming and aligning of the centre of gravity of the container in the horizontal plane may then be performed after the container has been secured by means of the coupling systems.

If the amphibious means of transport is provided with several weight sensors which are mutually spaced apart (for example, at the level of the propulsion systems), these sensors may also be used to determining and optimizing the vertical centre of gravity of the combination of the at least one means of transport, the supported container, and the cargo if present. Controlled partial vertical height adjustment of the combination on a fixed base will allow the container (and cargo) to be tilted over a longitudinal side or transverse side, so that measurement of local weight changes by the weight sensors may provide an indication of the vertical centre of gravity. For purposes of this height adjustment, the amphibious means of transport may be provided with independent vertical actuators, preferably at the propulsion systems. In embodiments with a loading/unloading system and lift actuators for the container, these lift actuators may also be separately regulated for controlled partial height adjustment with respect to the floats.

Embodiments are also possible in which the amphibious means of transport are provided with a mutual coupling system by which the floats of the amphibious means of transport may be secured directly to each other, without requiring the presence of an intermediate mechanical connection to a container. One or each of the amphibious means of transport may be provided with such a mutual coupling system. In embodiments where the amphibious means of transport may be coupled to the container while the floats are positioned along the longitudinal walls of the container, the mutual coupling system is preferably provided with an adjustment mechanism for dynamic adjustment of the mutual positions of the floats in at least the transverse directions. The amphibious means of transport in mutually coupled state may for example assume the shape of a U or H, wherein the transverse length of the joining coupling system may be dynamically adjusted by means of the adjustment mechanism, for purposes of weight stabilization and/or width optimization.

The reference numbers in the claims serve only as an illustration and should not be considered as limiting to the interpretation of the claims. For conciseness, similar reference numbers which correspond to similar elements in described embodiments are only indicated in the claims by their base numbers (i.e., without the hundreds digit), when correspondences with several embodiments are possible. This does not imply that these claim elements refer only to elements from the specification that correspond to a base number. Thus, for example, the reference number (30) in the claims is read as (30; 130; 230) when this correspondence is applicable. The applicability of several similar reference numbers in the claims follows from a comparison with the figures and the specification. In cases where a correspondence focuses on a specific embodiment, specific reference numbers with a hundreds digits are used in the claims.

### LIST OF REFERENCE SYMBOLS

Comparable reference numbers used in the specification to indicate similar elements (only differing by the hundreds digit) are omitted from the following list, but are deemed to be implicitly included.
- 10: amphibious means of transport
- 12: intercontinental container
- 14: water
- 16: land
- 18: ramp system
- 20: flotation means
- 21: ballast
- 22: first propulsion system
- 23: second propulsion system
- 24: first land transport member (subsystem)
- 25: second land transport member
- 26: first water transport member (subsystem)
- 27: second water transport member
- 28: drive system
- 30: motor subsystem
- 32: power supply subsystem
- 34: control system
- 36: sensor system
- 38: coupling (decoupling) system
- 39: top side (e.g., loading platform)
- 40: trim system
- 42: first trim subsystem (e.g. longitudinal actuator)
- 44: second trim subsystem (e.g. transverse actuator)
- 46: loading/unloading system (e.g. vertical actuator)
- 48: container coupling
- 50: guidance (e.g. rails)
- 60: central control system
- 62: route beacons
- 64: on board
- 66: direct surroundings
- 68: manned vehicle
- 70: manned vessel
- 72: physical coupling system
- 80: longitudinal wall
- 82: transverse wall
- 84: base
- 86: top surface
- 390: wheel well
- 391: second wheel well
- X: first direction (e.g., longitudinal direction)
- Y: second direction (e.g., transverse direction)
- Z: third direction (e.g., height direction)

## Claims

1. A method for transporting ISO containers, comprising:
- providing an amphibious means of transport (10) which is outfitted with flotation means (20), land transport members (24, 25), propulsion means (22, 23), and control means (34),
- supporting at least one ISO container (12) with the means of transport,
- moving the means of transport over land (16) by means of the land transport members and the propulsion means, the method is **characterized by** further comprising:
- moving the means of transport with supported ISO container over a body of water (14) by means of the flotation means and the propulsion means, and moving the means of transport in dependence on a guide vehicle in the manner of a "master/slave" control system, such as a guide vehicle in the form of at least one other means of transport (10a) to form a convoy, and wherein the buoyancy of the means of transport with supported ISO container is provided exclusively by the flotation means of that means of transport, and
- unloading the ISO container.

2. The method according to claim 1, comprising:
- providing an infrastructure with beacons (62), such as transmitters,
- providing a sensor system (36) on the means of transport (10),
- controlling the means of transport by means of the control means (34) based on exchange of data between the beacons or transmitters and sensors.

3. The method according to claim 2, wherein control of the means of transport (10) is exercised in an autonomous manner exclusively on the basis of the exchange of data between beacons (62) or transmitters and sensors (36).

4. The method according to one of the preceding claims, comprising:
- dynamically trimming the means of transport (10) in longitudinal and transverse directions (X, Y) with respect to the supported container (12), in dependence on the position of the centre of gravity of the container supported by the means of transport, for stabilizing and/or optimizing propulsion of the means of transport with container.

5. The method according to one of claims 1 to 4, comprising:
- providing a further amphibious means of transport (110b) in addition to the amphibious means of transport (110a), wherein the means of transport (110a, 110b) are each provided with coupling systems (138a, 138b);
- positioning each of the means of transport along two opposite longitudinal sides (180a, 180b) or transverse sides (182a, 182b) of the ISO container (112);
- independently coupling each of the means of transport to the ISO container (112) by means of the coupling systems, in order to jointly support the ISO container, and
- moving the means of transport with supported ISO container over land (116) and over water (114).

6. The method according to claim 5, wherein each of the means of transport (110a, 110b) is provided with a loading/unloading system (146a, 146b) and with a float (120a, 120b) having a top side (139a, 139b), wherein the method comprises:
- jointly lifting the coupled ISO container with a base surface (184) to above the top sides of the floats by means of the loading/unloading systems, prior to moving the means of transport with supported ISO container over land (116) and over water (114).

7. An amphibious means of transport (10) for transporting containers, comprising:
- a chassis,
- support means on or at the chassis for an ISO container (12),
- flotation means (20) interacting with the chassis for providing buoyancy in a body of water (14),
- means for land transport (24, 25) for providing support on a land surface (16),
- propulsion means (22, 23) for movement in water and on land,
- control means (34) for steering in water and on land, and
- communication means (36), including a sensor system, both for sending data, such as data relating to position and/or speed, and for receiving data, such as data relating to routeing,
**characterized in that** the water mass to be displaced by the flotation means is greater than the sum of the mass of the means of transport, the mass of the container, and the mass of the cargo in the container, and the control means (34) are configured to move the means of transport (10) in dependence on a guide vehicle in the manner of a "master/slave" control system, such as a guide vehicle in the form of at least one further means of transport (10a) to form a convoy.

8. The means of transport (10) according to claim 7, wherein the control means (34) are designed to operate fully autonomously, so as to follow a route on the basis of data which is exchanged via the means of communication (36) with regard to routeing.

9. The means of transport (10) according to claim 7 or 8, comprising a trim mechanism (40) for dynamically trimming the means of transport in longitudinal and transverse directions (X, Y) with respect to the supported ISO container (12), in dependence on the position of the centre of gravity of the container supported by the means of transport, for stabilization and/or propulsion optimization of the means of transport with container.

10. The means of transport (10) according to one of claims 7 to 9, comprising:
- at least two vertical actuators which are physically spaced apart for local adjustment of the means of transport, possibly in combination with the supported ISO container (12) and cargo, in a vertical direction (Z) with respect to a fixed base, and
- at least two weight sensors which are mutually spaced for local determination of a weight of the means of transport, possibly in combination with the supported ISO container (12) and cargo, with respect to the fixed base;
wherein the vertical actuators and weight sensors are configured to cooperate for determining the vertical centre of gravity of the means of transport, possibly in combination with the supported ISO container and cargo.

11. An arrangement of two means of transport (110a, 110b) according to one of claims 7 to 10, wherein each means of transport is provided with a coupling system (138a, 138b) for coupling the respective means of transport with the ISO container (112), so that the means of transport are each positioned along a corresponding longitudinal side (180a, 180b) or transverse side (182a, 182b) of the ISO container, in order to jointly support and move the ISO container over land (116) and over water (114).

12. The arrangement of means of transport (110a, 110b) according to claim 11, wherein each means of transport is provided with a float (120a, 120b) having a top side (139a, 139b), and with a loading/unloading system (146a, 146b) which is adapted to jointly lift the coupled ISO container (112) with a base surface (184) to above the top sides of the floats, prior to moving the means of transport with supported ISO container over land (116) and over water (114).

13. The arrangement of means of transport (110a, 110b) according to claim 11 or 12, wherein at least one of the coupling systems (138a, 138b) comprises a trim system (140a, 140b), which is provided with actuator mechanisms (142, 144) for independently moving the ISO container (112) in the longitudinal and/or transverse directions (X, Y) with regard to the corresponding float (120).

## Patentansprüche

1. Verfahren zum Transportieren von ISO-Containern, das folgendes aufweist:
- Vorsehen eines Amphibientransportmittels (10), das mit Flotationsmitteln (20), Landtransportgliedern (24, 25), Antriebsmitteln (22, 23) und Steuermitteln (34) ausgestattet ist,
- Tragen wenigstens eines ISO-Containers (12) mit dem Transportmittel,
- Bewegen des Transportmittels über Land (16) mittels der Landtransportglieder und der Antriebsmittel, wobei das Verfahren **dadurch gekennzeichnet** ist, das es ferner folgendes aufweist:
- Bewegen des Transportmittels mit getragenem ISO-Container über ein Gewässer (14) mittels der Flotationsmittel und der Antriebsmittel, und Bewegen des Transportmittels in Abhängigkeit von einem Führungsfahrzeug nach Art eines "Master/Slave"-Steuersystem, wie beispielsweise eines Führungsfahrzeug in Form wenigstens eines anderen Transportmittels (10a), um einen Konvoi zu bilden, und wobei der Auftrieb des Transportmittels mit getragenem ISO-Container ausschließlich durch die Flotationsmittel dieses Transportmittels vorgesehen wird und
- Entladen der ISO-Container.

2. Verfahren nach Anspruch 1, das folgendes aufweist:
- Vorsehen einer Infrastruktur mit Baken (62), wie beispielsweise Sendern,
- Vorsehen eines Sensorsystems (36) an dem Transportmittel (10),
- Steuern des Transportmittels mittels der Steuermittel (34) basierend auf dem Datenaustausch zwischen den Baken oder Sendern und Sensoren.

3. Verfahren nach Anspruch 2, wobei die Steuerung des Transportmittels (10) ausschließlich auf der Grundlage des Datenaustauschs zwischen Baken (62) oder Sendern und Sensoren (36) in einer autonomen Art erfolgt.

4. Verfahren nach einem der vorhergehenden Ansprüche, das folgendes aufweist:
- dynamisches Trimmen des Transportmittels (10) in Längs- und Querrichtung (X, Y) bezüglich des getragenen Containers (12) in Abhängigkeit von der Position des Schwerpunkts des vom Transportmittel getragenen Containers zur Stabilisierung und/oder Optimierung des Antriebs des Transportmittels mit Container.

5. Verfahren nach einem der Ansprüche 1 bis 4, das folgendes aufweist:
- Vorsehen eines weiteren Amphibientransportmittels (110b) zusätzlich zu dem Amphibientransportmittel (110a), wobei die Transportmittel (110a, 110b) jeweils mit Kopplungssystemen (138a, 138b) versehen sind;
- Positionieren jedes Transportmittels entlang zweier gegenüberliegender Längsseiten (180a,180b) oder Querseiten (182a, 182b) des ISO-Containers (112);
- unabhängiges Koppeln jedes Transportmittels an den ISO-Container (112) mittels der Kopplungssysteme, um den ISO-Container gemeinsam zu tragen, und
- Bewegen des Transportmittels mit getragenem ISO-Container über Land (116) und über Wasser (114).

6. Verfahren nach Anspruch 5, wobei jedes der Transportmittel (110a, 110b) mit einem Lade-/Entladesystem (146a, 146b) und mit einem Schwimmkörper (120a, 120b) mit einer Oberseite (139a,139b) versehen ist, wobei das Verfahren folgendes aufweist:
- gemeinsames Anheben des gekoppelten ISO-Containers mit einer Grundfläche (184) über die Oberseiten der Schwimmkörper mittels der Lade-/Entladesysteme, bevor das Transportmittel mit getragenem ISO-Container über Land (116) und über Wasser (114) bewegt wird.

7. Amphibientransportmittel (10) zum Transportieren von Containern, das folgendes aufweist:
- ein Fahrgestell,
- Tragemittel auf oder an dem Fahrgestell für einen ISO-Container (12),
- Flotationsmittel (20), die mit dem Fahrgestell interagieren, zum Vorsehen eines Auftriebs in einem Gewässer (14),
- Landtransportmittel (24, 25) zum Vorsehen einer Unterstützung auf einer Landoberfläche (16),
- Antriebsmittel (22, 23) zur Bewegung im Wasser und an Land,
- Steuermittel (34) zum Lenken im Wasser und an Land, und
- Kommunikationsmittel (36) mit einem Sensorsystem sowohl zum Senden von Daten, beispielsweise Daten bezüglich Position und/oder Geschwindigkeit, als auch zum Empfangen von Daten, beispielsweise Daten bezüglich eines Routens, **dadurch gekennzeichnet, dass**
die durch die Flotationsmittel zu verdrängende Wassermasse größer ist als die Summe der Masse des Transportmittels, der Masse des Containers und der Masse der Fracht in dem Container,
und die Steuermittel (34) konfiguriert sind, um das Transportmittel (10) in Abhängigkeit von einem Führungsfahrzeug nach Art eines "Master/Slave"-Steuersystems zu bewegen, beispielsweise eines Führungsfahrzeugs in der Form wenigstens eines weiteren Transportmittels (10a), um einen Konvoi zu bilden.

8. Transportmittel (10) nach Anspruch 7, wobei die Steuermittel (34) entworfen sind, um vollständig autonom zu arbeiten, um auf der Grundlage von Daten, die über die Kommunikationsmittel (36) bezüglich des Routens ausgetauscht werden, einer Route zu folgen.

9. Transportmittel (10) nach einem der Ansprüche 7 oder 8, das einen Trimmmechanismus (40) zum dynamischen Trimmen des Transportmittels in Längs- und Querrichtung (X, Y) bezüglich des getragenen ISO-Containers (12) in Abhängigkeit von der Position des Schwerpunkts des vom Transportmittel getragenen Containers zur Stabilisierung und/oder Antriebsoptimierung des Transportmittels mit Container aufweist.

10. Transportmittel (10) nach einem der Ansprüche 7 bis 9, das folgendes aufweist:
- wenigstens zwei Vertikalbetätiger, die räumlich voneinander beabstandet sind, um das Transportmittel örtlich einzustellen, möglicherweise in Kombination mit dem getragenen ISO-Container (12) und Fracht in vertikaler Richtung (Z) bezüglich einer festen Basis; und
- wenigstens zwei Gewichtssensoren, die zur lokalen Bestimmung eines Gewichts des Transportmittels voneinander beabstandet sind, möglicherweise in Kombination mit dem getragenen ISO-Container (12) und Fracht bezüglich der festen Basis;
wobei die Vertikalbetätiger und Gewichtssensoren konfiguriert sind, um zusammenzuarbeiten, um den vertikalen Schwerpunkt des Transportmittels zu bestimmen, möglicherweise in Kombination mit dem getragenen ISO-Container und der Fracht.

11. Anordnung von zwei Transportmitteln (110a, 110b) nach einem der Ansprüche 7 bis 10, wobei jedes Transportmittel mit einem Kopplungssystem (138a, 138b) zum Koppeln des jeweiligen Transportmittels mit dem ISO-Container (112) versehen ist, so dass die Transportmittel jeweils entlang einer entsprechenden Längsseite (180a, 180b) oder Querseite (182a, 182b) des ISO-Containers positioniert sind, um den ISO-Container gemeinsam über Land (116) und über Wasser (114) zu tragen und zu bewegen.

12. Anordnung von Transportmitteln (110a, 110b) nach Anspruch 11, wobei jedes Transportmittel mit einem Schwimmkörper (120a, 120b) mit einer Oberseite (139a, 139b) und mit einem Lade-/Entladesystem (146a, 146b) versehen ist, das geeignet ist, den gekoppelten ISO-Container (112) mit einer Grundfläche (184) gemeinsam über die Oberseiten der Schwimmkörper anzuheben, bevor dem Bewegen des Transportmittels mit getragenem ISO-Container über Land (116) und über Wasser (114).

13. Anordnung von Transportmitteln (110a, 110b) nach Anspruch 11 oder 12, wobei wenigstens eines der Kopplungssysteme (138a, 138b) ein Trimmsystem (140a, 140b) aufweist, das mit Betätigermechanismen (142, 144) zum unabhängigen Bewegen des ISO-Containers (112) in Längs- und/oder Querrichtung (X, Y) bezüglich des entsprechenden Schwimmkörpers (120) versehen ist.

## Revendications

1. Procédé pour transporter des conteneurs ISO, comprenant :
- la fourniture d'un moyen de transport amphibie (10) qui est équipé de moyens de flottaison (20), d'éléments de transport terrestre (24, 25), de moyens de propulsion (22, 23) et de moyens de commande (34),
- le support d'au moins un conteneur ISO (12) avec le moyen de transport,
- le déplacement du moyen de transport sur la terre (16) au moyen des éléments de transport terrestre et des moyens de propulsion, le procédé est **caractérisé en ce qu'**il comprend en outre :
- le déplacement du moyen de transport avec le conteneur ISO supporté sur une étendue d'eau (14) au moyen des moyens de flottaison et des moyens de propulsion, et le déplacement du moyen de transport en dépendance d'un véhicule guide à la manière d'un système de commande « maître/esclave », tel qu'un véhicule guide sous la forme d'au moins un autre moyen de transport (10a) pour former un convoi, et dans lequel la flottabilité du moyen de transport avec le conteneur ISO supporté est assurée exclusivement par les moyens de flottaison de ce moyen de transport, et
- le déchargement du conteneur ISO.

2. Procédé selon la revendication 1, comprenant :
- la fourniture d'une infrastructure avec des balises (62), telles que des émetteurs,
- la fourniture d'un système de capteurs (36) sur le moyen de transport (10),
- la commande du moyen de transport au moyen des moyens de commande (34) sur la base d'un échange de données entre les balises ou émetteurs et capteurs.

3. Procédé selon la revendication 2, dans lequel la commande du moyen de transport (10) est exercée d'une manière autonome exclusivement sur la base de l'échange de données entre balises (62) ou émetteurs et capteurs (36).

4. Procédé selon l'une des revendications précédentes, comprenant :
- l'équilibrage dynamique du moyen de transport (10) dans les directions longitudinale et transversale (X, Y) par rapport au conteneur supporté (12), en dépendance de la position du centre de gravité du conteneur supporté par le moyen de transport, pour stabiliser et/ou optimiser la propulsion du moyen de transport avec conteneur.

5. Procédé selon l'une des revendications 1 à 4, comprenant :
- la fourniture d'un autre moyen de transport amphibie (110b) en plus du moyen de transport amphibie (110a), dans lequel les moyens de transport (110a, 110b) sont chacun pourvus de systèmes d'accouplement (138a, 138b) ;
- le positionnement de chacun des moyens de transport le long de deux côtés longitudinaux opposés (180a, 180b) ou de côtés transversaux (182a, 182b) du conteneur ISO (112) ;
- l'accouplement indépendant de chacun des moyens de transport au conteneur ISO (112) au moyen des systèmes d'accouplement, afin qu'ils supportent solidairement le conteneur ISO, et
- le déplacement des moyens de transport avec le conteneur ISO supporté sur la terre (116) et sur l'eau (114).

6. Procédé selon la revendication 5, dans lequel chacun des moyens de transport (110a, 110b) est pourvu d'un système de chargement/déchargement (146a, 146b) et d'un flotteur (120a, 120b) ayant un côté supérieur (139a, 139b), dans lequel le procédé comprend :
- le soulèvement solidaire du conteneur ISO accouplé avec une surface de base (184) au-dessus des côtés supérieurs des flotteurs au moyen des systèmes de chargement/déchargement, avant de déplacer les moyens de transport avec le conteneur ISO supporté sur la terre (116) et sur l'eau (114).

7. Moyen de transport amphibie (10) pour transporter des conteneurs, comprenant :
- un châssis,
- des moyens de support sur le ou au châssis pour un conteneur ISO (12),
- des moyens de flottaison (20) interagissant avec le châssis pour fournir une flottabilité dans une étendue d'eau (14),
- des moyens de transport terrestre (24, 25) pour assurer le support sur une surface terrestre (16),
- des moyens de propulsion (22, 23) pour déplacement dans l'eau et sur terre,
- des moyens de commande (34) pour assurer la direction dans l'eau et sur terre, et
- des moyens de communication (36), comportant un système de capteurs, à la fois pour envoyer des données, telles que des données relatives à la position et/ou la vitesse, et pour recevoir des données, telles que des données relatives au routage,
**caractérisé en ce que**
la masse d'eau devant être déplacée par les moyens de flottaison est supérieure à la somme de la masse du moyen de transport, de la masse du conteneur et de la masse de la charge dans le conteneur,
et les moyens de commande (34) sont configurés pour déplacer le moyen de transport (10) en dépendance d'un véhicule guide à la manière d'un système de commande « maître/esclave », tel qu'un véhicule guide sous la forme d'au moins un autre moyen de transport (10a) pour former un convoi.

8. Moyen de transport (10) selon la revendication 7, dans lequel les moyens de commande (34) sont conçus pour fonctionner de manière pleinement autonome, de sorte à suivre une route sur la base de données relatives au routage qui sont échangées via les moyens de communication (36).

9. Moyen de transport (10) selon la revendication 7 ou 8, comprenant un mécanisme d'équilibrage (40) pour équilibrer de manière dynamique le moyen de transport dans les directions longitudinales et transversales (X, Y) par rapport au conteneur ISO supporté (12), en dépendance de la position du centre de gravité du conteneur supporté par le moyen de transport, pour stabilisation et/ou optimisation de propulsion du moyen de transport avec conteneur.

10. Moyen de transport (10) selon l'une des revendications 7 à 9, comprenant :
- au moins deux actionneurs verticaux qui sont espacés physiquement pour ajustement local du moyen de transport, éventuellement en combinaison avec le conteneur ISO supporté (12) et la charge, dans une direction verticale (Z) par rapport à une base fixe, et
- au moins deux capteurs de poids qui sont espacés mutuellement pour détermination locale d'un poids du moyen de transport, éventuellement en combinaison avec le conteneur ISO supporté (12) et la charge , par rapport à la base fixe ;
dans lequel les actionneurs verticaux et les capteurs de poids sont configurés pour coopérer pour déterminer le centre de gravité vertical du moyen de transport, éventuellement en combinaison avec le conteneur ISO supporté et la charge.

11. Agencement de deux moyens de transport (110a, 110b) selon l'une des revendications 7 à 10, dans lequel chaque moyen de transport est pourvu d'un système d'accouplement (138a, 138b) pour accouplement des moyens de transport respectifs avec le conteneur ISO (112) de sorte que les moyens de transport sont chacun positionnés le long d'un côté longitudinal (180a, 180b) ou côté transversal (182a, 182b) du conteneur ISO, afin qu'ils supportent et déplacent solidairement le conteneur ISO sur la terre (116) et sur l'eau (114).

12. Agencement de moyens de transport (110a, 110b) selon la revendication 11, dans lequel chaque moyen de transport est pourvu d'un flotteur (120a, 120b) ayant un côté supérieur (139a, 139b), et d'un système de chargement/déchargement (146a, 146b) qui est adapté pour soulever solidairement le conteneur ISO accouplé (112) avec une surface de base (184) au-dessus des côtés supérieurs des flotteurs, avant de déplacer les moyens de transport supportant le conteneur ISO sur la terre (116) et sur l'eau (114).

13. Agencement de moyens de transport (110a, 110b) selon la revendication 11 ou 12, dans lequel au moins un des systèmes d'accouplement (138a, 138b) comprend un système d'équilibrage (140a, 140b) qui est pourvu de mécanismes actionneurs (142, 144) pour déplacer de manière indépendante le conteneur ISO (112) dans les directions longitudinale et/ou transversale (X, Y) par rapport au flotteur (120) correspondant.
